# EUROPEAN PATENT SPECIFICATION

(11) **EP 4 434 887 B1**
(45) Date of publication and mention of the grant of the patent: **11.11.2026**
(21) Application number: 24162333.9
(22) Date of filing: 08.03.2024
(51) Int. Cl.: B64D 11/06

(54) **ARRANGEMENTS OF LIE FLAT SEATS WITH OBLIQUE FRONT ROW**
ANORDNUNG VON LIEGESITZEN MIT SCHRÄGER VORDERREIHE
AGENCEMENTS DE SIÈGES-LITS À COUCHAGE À RANGÉE AVANT OBLIQUE

(30) Priority: 08.03.2023 US 202318119005
(43) Date of publication of application: 25.09.2024
(73) Proprietor: B/E Aerospace, Inc., Winston-Salem, NC 27105 (US)
(72) Inventor: DOWTY, Mark B., Forsyth, NC (US); LARA, Oscar Ruiz, Kirkland, WA (US)
(74) Representative: Dehns

(56) References cited:
- EP-A1- 0 850 834
- EP-A1- 3 378 770
- DE-A1- 102020 105 072

## Description

### TECHNICAL FIELD AND BACKGROUND

The present disclosure relates generally to passenger seat configurations for aircraft cabins, and more particularly, to nesting arrangements of lie flat seats including a row of oblique seats and a row of forward facing seats for space savings in the passenger cabin.

Configurations of passenger seats in commercial airliners typically include rows and columns. Columns are typically oriented parallel to the aircraft longitudinal axis while rows are typically oriented transverse to the aircraft longitudinal axis. Columns are typically separated by longitudinal aisles. Narrow body aircraft may include a single longitudinal aisle separating two columns, whereas wide body aircraft may include two longitudinal aisles separating three columns. In wide body aircraft, seat rows in the center column may include a greater number of seats as compared to rows in the outboard columns considering the desire to provide direct seat access from one of the longitudinal aisles.

Passenger seats within each row and column may be oriented at different angles. Per the Federal Aviation Administration (FAA), passenger seats may be classified as forward facing or side-facing depending on the seat installation angle. Different certification criteria are provided depending on the installation angle from the aircraft centerline as measured from the forward direction. Forward facing seats include any seat installed at an angle up to and including 18 degrees. Side facing seats include any seat installed at an angle greater than 18 degrees. Oblique seats, which are a subset of side facing seats, include any seat installed at an angle greater than 18 degrees up to and including 45 degrees.

Conventional configurations of passenger seats, and in particular business class passenger seats, include forward facing, herringbone, and reverse herringbone configurations. In each of these configurations, each row is configured the same as at least one other row such that rows or row pairings can be repeated along the longitudinal length of the cabin. While repetition provides for uniformity and cost savings, some cabin configurations would benefit from at least one unique seat row, for example, where the fuselage shape or other portions of the cabin do not allow for a uniform row. Alternative seat configurations are disclosed in DE 10 2020 105072 A1 and EP 0 850 834 A1.

Therefore, it would be desirable to provide a unique configuration of seats that balances seat density and lie flat all-access configurations.

### BRIEF SUMMARY

To achieve the foregoing and other advantages, according to a first aspect, the present disclosure provides a configuration for a column of lie flat passenger seats as defined by claim 1.

In some embodiments, the first row is a front row, the column is a center column configured to be positioned between two longitudinal aisles oriented parallel to an aircraft longitudinal axis, the first row includes two oblique seats, and the two oblique seats are oriented in a toes-out or a toes-in configuration.

In some embodiments, the second row includes two forward facing seats, each of the at least one further row includes two forward facing seats, and the two forward facing seats of the second row and the at least one further row are positioned in an alternating configuration in which every other row the two forward facing seats are positioned side-by-side and every other row the two forward facing seats are positioned spaced apart.

In some embodiments, the configuration further includes a partition wall positioned aft of each of the front row, the second row, and the at least one further row.

In some embodiments, a portion of each of the two oblique seats, when in the lie flat condition, extends into a footwell space formed in a monument positioned forward of the front row.

In some embodiments, the configuration further includes a partition positioned between the two oblique seats, the partition configured to adjust between an extended condition and a retracted condition.

In some embodiments, the first row, for instance the front row, includes a single oblique seat oriented toes-in or toes-out, the second row includes a single forward facing seat, each of the at least one further row includes a single forward facing seat, and the single forward facing seats of the second row and the at least one further row are positioned in an alternating inboard and outboard configuration relative to a longitudinal aisle.

In some embodiments, the configuration further includes a console positioned to one side of each of the at least one oblique seat of the front row, the at least one forward facing seat of the second row, and the at least one forward facing seat of the at least one further row.

In some embodiments, the configuration further includes a footwell space formed in each console.

In a further aspect, the present disclosure provides a configuration for a passenger cabin of an aircraft. The configuration includes a first longitudinal aisle oriented parallel to an aircraft longitudinal axis, a second longitudinal aisle oriented parallel to the aircraft longitudinal axis, a starboard column of lie flat seats positioned to one side of the first longitudinal aisle, a port column of lie flat seats positioned to one side of the second longitudinal aisle, and a center column of lie flat seats positioned between the first longitudinal aisle and the second longitudinal aisle. The port and starboard columns have seat configured as defined above.

In some embodiments, in the center column, the two forward facing seats of the second row and the at least one further row are positioned in an alternating configuration in which every other row the two forward facing seats are positioned side-by-side and every other row the two forward facing seats are positioned spaced apart.

In some embodiments, the configuration further includes, in each of the starboard column, the port column, and the center column, a partition wall positioned aft of each of the front row, the second row, and the at least one further row.

In some embodiments, the configuration further includes a monument positioned forward of the front row of each of the starboard column, the port column, and the center column, each monument including a footwell.

In some embodiments, the configuration further includes a partition positioned between the two oblique seats in the center column, the partition configured to adjust between an extended condition and a retracted condition.

In some embodiments, for each of the starboard column and the port column, the single oblique seat is oriented toes-in or toes-out, and the single forward facing seats of the second row and the at least one further row are positioned in an alternating inboard and outboard configuration relative to their respective first or second longitudinal aisle.

In some embodiments, the configuration further includes a console positioned to one side of each of the single oblique seat of the front row of each of the starboard column and the port column, the two oblique seats of the front row of the center column, the single forwarding facing seats of the second row and at least one further row of the starboard column and the port column, and the two forward facing seats of the second row and the at least one further row of the center column.

In some embodiments, a footwell space is formed in each console for use by a seat positioned aft of the console.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 is a plan view of a configuration for an oblique first row for an aircraft passenger cabin, in accordance with at least one embodiment of the present disclosure;
FIG. 2 is a plan view of a configuration for a center column including an oblique first row, in accordance with at least one embodiment of the present disclosure;
FIG. 3 is a plan view of a configuration of lie flats including an oblique first row with a center column toes-in configuration, in accordance with at least one embodiment of the present disclosure;
FIG. 4 is a plan view of a configuration of lie flats including an oblique first row with a center column toes-out configuration, in accordance with at least one embodiment of the present disclosure;
FIG. 5 is a plan view of an exemplary further configuration for a center column including an oblique first row, not falling within the scope of the claims; and
FIG. 6 is an overlay showing space saving provided by an oblique first row according to the present disclosure.

### DETAILED DESCRIPTION

Before explaining embodiments of the inventive concepts disclosed herein in detail, it is to be understood that the inventive concepts disclosed herein are not limited in their application to the details of construction and the arrangement of the components or steps or methodologies set forth in the following description or illustrated in the drawings. In the following detailed description of embodiments of the present disclosure, numerous specific details are set forth in order to provide a more thorough understanding of the inventive concepts. However, it will be apparent to one of ordinary skill in the art having the benefit of the present disclosure that the inventive concepts disclosed herein may be practiced without these specific details. In other instances, well-known features may not be described in detail to avoid unnecessarily complicating the present disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein, where applicable, a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present). In addition, use of the "a" or "an" are employed to describe elements and components of embodiments of the present inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination or sub-combination of two or more such features, along with any other features which may not necessarily be expressly described or inherently present in the present disclosure.

Broadly, the present disclosure provides configurations of lie flat passenger seats, for instance business class passenger seats, wherein the front row in any column of seats includes at least one oblique seat and the other seats in the second and further rows of the column include forward facing seats. In some embodiments, none of the second row and further rows of the same column include an oblique seat. Columns according to the present disclosure therefore include a front row seat configuration that is unique as compared to the other seat rows in that same column. In some embodiments, the front row is unique as compared to the second and further rows, and the further rows are unique as compared to the second row.

As used herein, the term "oblique seat" means any side facing seat installed at an angle greater than 18 degrees up to and including 45 degrees from the aircraft centerline. In a preferred embodiment, an oblique seat according to the present disclosure is installed at an angle of about 30 degrees. As used herein, the term "forward facing seat" means any seat installed at an angle up to and including 18 degrees from the aircraft centerline, regardless of whether the seat faces toward the front of the aircraft (i.e., forward facing) or toward the rear of the aircraft (i.e., aft facing). As used herein, the term "toes-in" means angled away from the nearest longitudinal aisle while the term "toes-out" means angled toward the nearest longitudinal aisle. For a starboard or port column, an oblique seat oriented "toes-out" means angled toward the fuselage wall whereas an oblique seat oriented "toes-in" means angled toward the nearest longitudinal aisle. For a center column, a pair of oblique seats oriented "toes-out" means seats converging in the direction of their head end whereas a pair of oblique seats oriented "toes-in" means seats converging in the direction of their foot end. The front of the aircraft and the direction of flight of the aircraft is toward the left of the page as viewed in the drawings. As used herein, the terms "nest" or "nesting" means to overlap in at least one of the lateral or longitudinal directions.

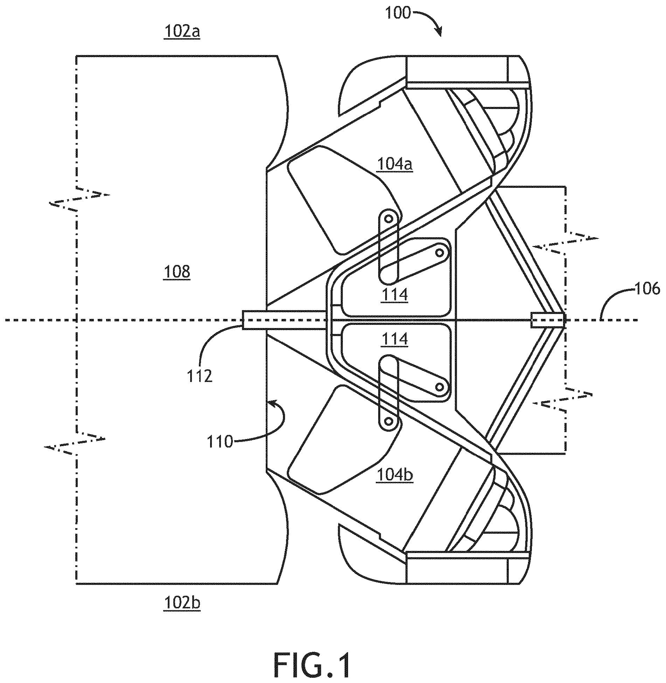

Referring to FIG. 1, a layout (e.g., configuration) for a first row according to an embodiment of the present disclosure is shown generally at 100. The first row 100 may be a front row of a center column positioned between a first longitudinal aisle 102a and a second longitudinal aisle 102b. The first row 100 includes a first oblique seat 104a and a second oblique seat 104b both oriented toes-in such that the seats are angled away from their respective longitudinal aisle 102a, 102b to maximize privacy. The first and second obliques seats 104a, 104b are longitudinally aligned. In some embodiments, the seat pairing is symmetrical about the aircraft centerline 106. The first oblique seat 104a is directly accessible from the first longitudinal aisle 102a and the second oblique seat 104b is directly accessible from the second longitudinal aisle 102b. Thus, both seats have direct aisle access.

The first and second oblique seats 104a, 104b are shown in a lie flat condition forming a horizontal or substantially horizontal bed. Each of the first and second oblique seats 104a, 104b are adjustable between an upright condition for taxi, takeoff, and landing (TTOL) and a lie flat condition during flight. Intermediate sitting positions may include reclined backrest positions, extended leg rest positions, etc. The first and second oblique seats 104a, 104b may or may not include leg rest. In some embodiments, the first and second oblique seats 104a, 104b include adjustable leg rests that extend into forward footwell space discussed further below. In some embodiments, the first and second oblique seats 104a, 104b translate to meet a footrest positioned in a forward footwell. Seats according to the present disclosure may further include head rests, arm rests, climatization systems, massage systems, etc. Seat motions may be controlled via actuation systems known to those skilled in the art.

The first row 100 may be positioned directly aft of a monument 108, such as a partition, closet, galley component, lavatory, etc. The monument 108 may include interior space for storage, appliances, galley carts, passenger quarters, crew quarters, etc. Footwell space 110 formed in the monument 108 accommodates bed deployment. The first row 100 may further include a partition 112 positioned between the first and second oblique seats 104a, 104b. In some embodiments, the partition 112 is configured to extend or deploy to close the space between the first and second oblique seats 104a, 104b and retract or stow to open the space between the first and second oblique seats 104a, 104b. In some embodiments, the partition 112 may extend by raising vertically and retract by lowering vertically, extend by translating horizontally in one direction and retract by translating horizontally in the opposite direction, for instance moving in and out of the monument 108.

The first row 100 further includes a console 114 positioned to one side of each of the first and second oblique seats 104a, 104b. Each console 114 generally includes a horizontal surface that may serve as a working surface and mounting location for seat controls, wireless charger, etc. The first row 100 may further include, for each of the first and second oblique seats 104a, 104b, a deployable meal table such as that shown deploying to an over-seat position via a linkage mechanism, a video monitor, and other amenities commensurate with passenger expectations of a business class seat. As discussed further below, each console 114 forms a footwell for use by a passenger in an aft row. Optional first row 100 features include partition walls, further privacy dividers, climatization systems, lighting systems, entry doors, etc.

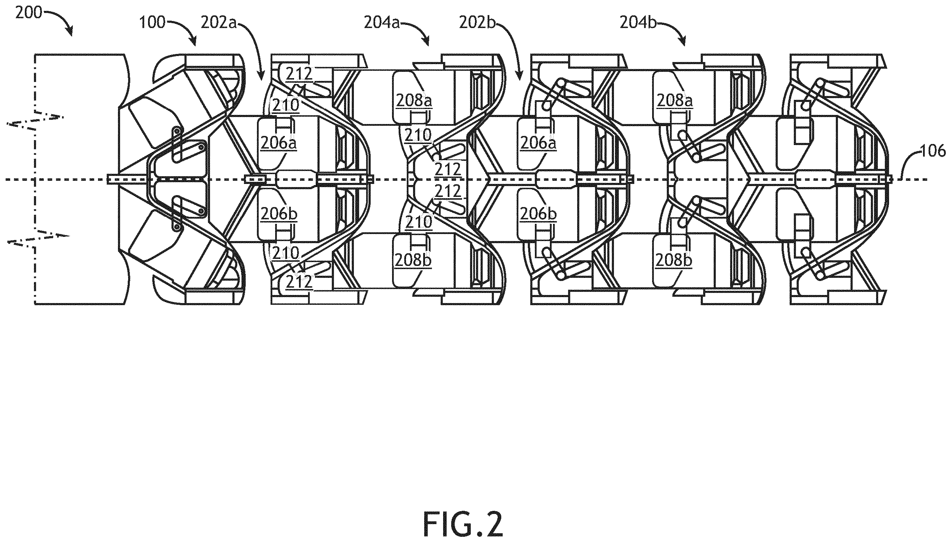

Referring to FIG. 2, a layout for a center column according to an embodiment of the present disclosure is shown generally at 200. The center column 200 includes the first row 100 shown in FIG. 1. The center column 200 further includes a second row 202a, a third row 204a, and a plurality of further rows in alternating fashion of the configuration of the second and third rows 202a, 204a. Thus, the first row 100 is unique as compared to all other rows, the even number rows 202a, 202b...202n all have the same configuration unique to these rows, and the odd number rows 204a, 204b...204n all have the same configuration unique to these rows (excluding the front row). As shown, the center column 200 is symmetrical about the aircraft centerline 106.

From the second row 202a to the end of the center column 200, none of these rows include an oblique seat. In other words, only the first row 100, which may a front row, includes oblique seats. As shown, each of the second row 202a through the last row shown include only forward facing seats, and more specifically, passenger seats oriented parallel to the aircraft longitudinal axis (i.e., the aircraft centerline 106). Each of the second row 202a and fourth row 202b include a seat pairing including first and second forward facing seats 206a, 206b positioned side-by-side and longitudinally aligned. Each of the third row 204a and fifth row 204b include a seat pairing including first and second forward facing seats 208a, 208b positioned spaced apart and longitudinally aligned. Each seat in the second row 202a back includes a console 210 positioned alongside the seat, which may or may not include a footwell for use by an aft positioned seat. Each seat in the second row 202a back may further include a further console 212 positioned forward of the seat, which may include a footwell for use by the respective seat. Each seat in the second row 202a back is configured to adjust between the upright condition and the lie flat condition. When in the lie flat condition, each seat is configured to nest with at least one other seat.

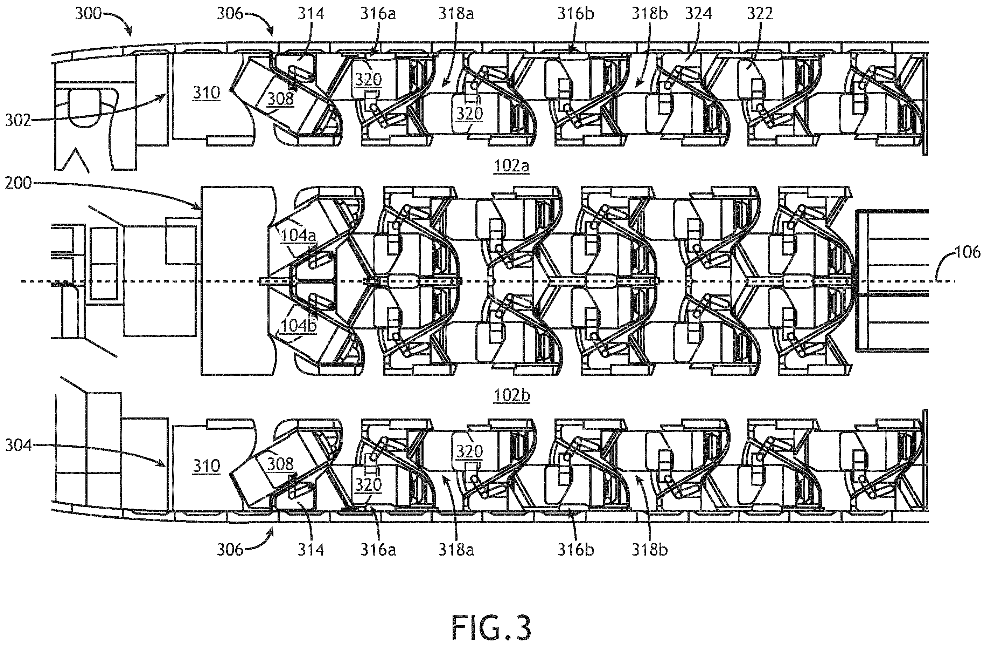

Referring to FIG. 3, a layout for an aircraft passenger cabin according to an embodiment of the present disclosure is shown generally at 300. The layout includes the center column 200 shown in FIG. 2. The layout 300 further includes the first longitudinal aisle 102a oriented parallel to the aircraft longitudinal axis or aircraft centerline 106, and the second longitudinal aisle 102b oriented parallel to the aircraft longitudinal axis. The layout 300 further includes a starboard column 302 of lie flat seats positioned to one side of the first longitudinal aisle 302, and a port column 304 of lie flat seats positioned to one side of the second longitudinal aisle 102b. In some embodiments, the starboard column 302 and the port column 304 are symmetrical about the aircraft centerline 106.

Each of the starboard column 302 and the port column 304 include a first row 306, such as a front row, including a single oblique seat 308. As shown, the single oblique seats 308 are oriented toes-out to maximize privacy of these seats and with respect to the oblique seats positioned directly across the respective longitudinal aisle 102a, 102b. The first rows of the 306 of the starboard and port columns 302, 304 may longitudinally aligned or staggered with respect to each other and with respect to the front row 100 of the center column 200. Each of the oblique seats 308 is directly accessible from its respective longitudinal aisle.

The oblique seats 308 are shown in the lie flat condition forming a horizontal or substantially horizontal bed. The oblique seats 308 are adjustable between the upright condition for TTOL and the lie flat condition during flight. Intermediate sitting positions may include reclined backrest positions, extended leg rest positions, etc. The oblique seats 308 may or may not include a leg rest. Seats according to the present disclosure may further include head rests, arm rests, climatization systems, massage systems, etc.

The front rows 306 of the starboard and port columns 302, 304 may be positioned directly aft of monuments 310, such as a partition, closet, galley component, lavatory, etc. The monuments 310 may include interior space for storage, appliances, galley carts, passenger quarters, crew quarters, etc. Footwell space may or may not be formed in the monuments to accommodate bed deployment. Each front row 306 further includes a console 314 positioned to one side of its respective oblique seat 308. As shown, the console 314 is positioned to the outboard side considering the two-out seat orientation. Each console 314 may include a horizontal surface that serves as a working surface and mounting location for seat controls, wireless charger, etc. Although not shown, the front rows 306 may further include a deployable meal table, a video monitor, and other amenities commensurate with passenger expectations of a business class seat. Each console 314 may form a footwell for use by a passenger in an aft row. Optional front row 306 features include partition walls, privacy dividers, climatization systems, lighting systems, entry doors, etc.

Each of the starboard and port columns 302, 304 includes a second row 316a, a third row 318a, and a plurality of further rows in alternating fashion of the configuration of the second and third rows 316a, 316b. Thus, the first row 306 is unique as compared to all other rows in the same column, the even number rows 316a, 316b...316n all have the same configuration unique to these rows, and the odd number rows 318a, 318b...318n all have the same configuration unique to these rows (excluding the front row).

From the second row 316a to the end of the starboard and port columns 302, 304, none of these rows include an oblique seat. In other words, only the front row 306 of each column includes oblique seats. As shown, each of the second row 316a through the last row shown include only forward facing seats 320, and more specifically, passenger seats oriented parallel to the aircraft longitudinal axis (i.e., the aircraft centerline 106). Each seat in the second row 316a back includes a console 322 positioned to one side of the seat, which may or may not include a footwell for use by an aft positioned seat. Each seat in the second row 316a back may further include a further console 324 positioned forward of the seat, which may include a footwell for use by the respective seat. Each seat in the second row 316a back is configured to adjust between the upright condition and the lie flat condition. When in the lie flat condition, each seat is configured to nest with at least one other seat.

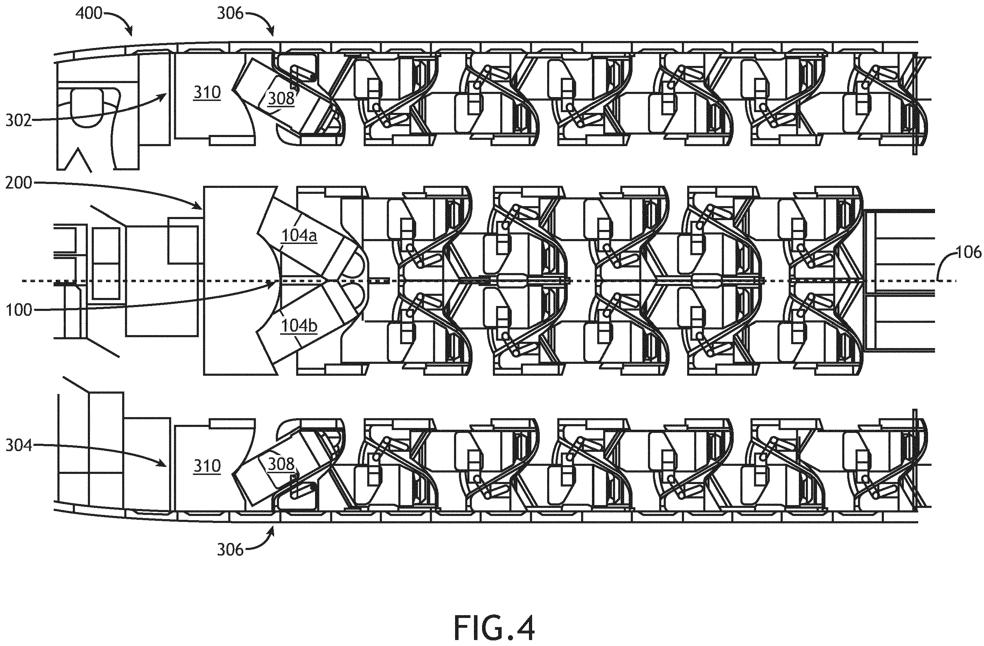

Referring to FIG. 4, a further layout for an aircraft passenger cabin according to an embodiment of the present disclosure is shown generally at 400. The layout 400 is the same as that shown in FIG. 3 in terms of the configurations of the starboard and port columns 302, 304. The layout 400 differs from that shown in FIG. 3 in terms of the center column 200. Whereas the center column 200 in FIG. 3 includes oblique seats 104a, 104b in the front row 100 that are oriented toe-in, the oblique seats 104a, 104b in the front row 100 in FIG. 3 are oriented toe-out. Considering this change in seat orientation, the seat pairings in the second and subsequent rows include spaced apart followed by side-by-side positioned seats in repeat as the seat rows continue, as compared to the pairings in the second and subsequent rows in the previous embodiments including side-by-side followed by spaced apart seat pairings in repeat.

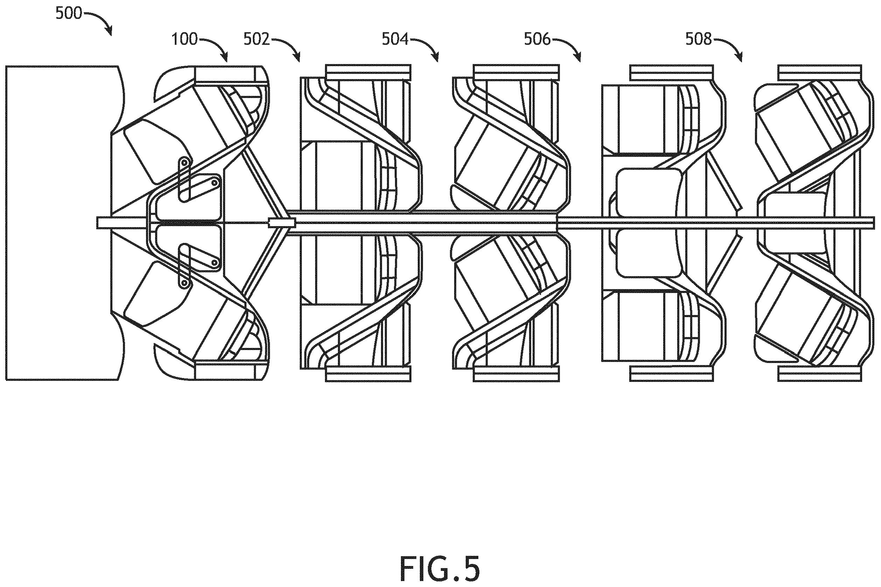

Referring to FIG. 5, a further layout for a center column according to an example not falling within the scope of the claims is shown generally at 500. In this center column 500, the front row 100 includes the toe-in oblique seat pairing, the second row 502 includes a forward facing seat paring with a zero degree installation angle, the third row 504 includes a forward facing seat pairing with an installation angle of 18 degrees or less, for instance about 11 degrees, the fourth row 506 includes a forward facing seat paring with a zero degree installation angle, and the fifth row 508 includes a forward facing seat pairing with an installation angle of 18 degrees or less, for instance about 11 degrees. The center column 500 may continue with a repeat of the second through fifth columns until the end of the column.

Considering the center column 500 includes forward facing seats at a shallow angle, various combinations of toes-in versus toes-out configurations are possible. As shown, the seat pairing in the second row 502 is side-by-side therefore the seat pairing in the third row 504 is a toes-out configuration, therefore the seat pairing in the fourth row 506 is spaced apart, therefore the seat pairing in the firth row is a toes-in configuration. Seat angles may vary so long as the second and further rows each include forward facing seats and not any oblique seats. Each forward facing seat in the second and further rows includes at least one console as discussed in the above embodiments as well as the optional seat row features.

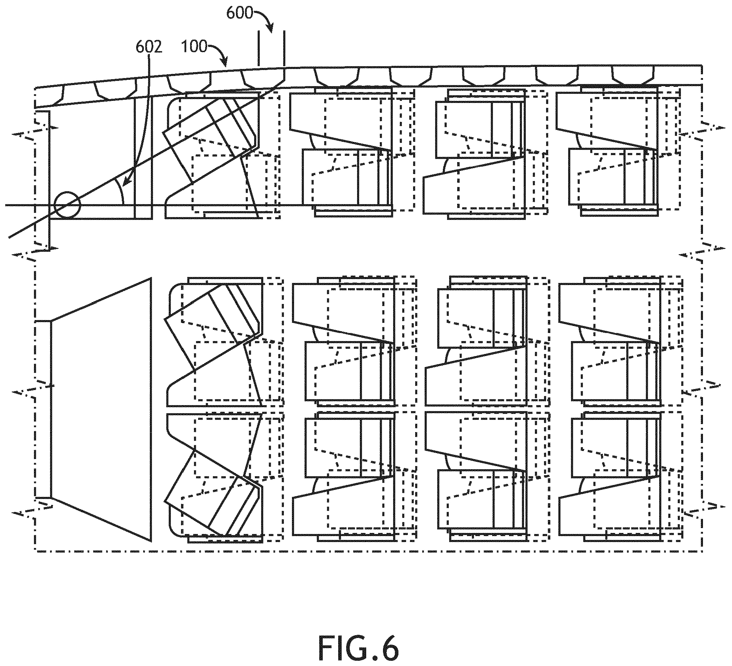

Referring to FIG. 6, this figure shows an oblique front row 100 according to the present disclosure overlaid on a conventional layout include all forward facing lie flat seats. The oblique seat angle in the front row 100 shortens a longitudinal length of the front row 100 thereby allowing each subsequent row to be shifted forward in the cabin. For an oblique seat installation angle of about 30 degrees as indicated at reference numeral 602, the shortened front row 100 provides a space gain of about 7 inches (17,78 cm) to about 9 inches (22,86 cm), indicated at reference numeral 600, which is realized along the length of the cabin, thereby balancing seat density and lie flat all-access configurations.

## Claims

1. A configuration for a column (200, 302) of lie flat passenger seats for an aircraft passenger cabin, comprising:
a first row (100, 306) including at least one oblique seat (104a, 104b, 308);
a second row (202a, 316a) positioned directly aft of the first row and including at least one forward facing seat (206a, 206b, 320); and
a plurality of further rows positioned aft of the second row and including at least one forward facing seat, the plurality of further rows comprising:
a third row (204a, 316a) positioned directly aft of the second row and including at least one forward facing seat (208a, 208b, 320); and
a fourth row (202b, 316b) positioned directly aft of the third row and including at least one forward facing seat (206a, 206b, 320) wherein:
the first row is a front row of the column;
none of the second row and the plurality of further rows includes an oblique seat; and
each of the at least one oblique seat of the first row and the at least one forward facing seat of each of the second row, the third row and the fourth row is configured to adjust between an upright condition and a lie flat condition; and
when in the lie flat condition, each of the at least one oblique seat and the at least one forward facing seat of each of the second row and the at least one further row is configured to nest with at least one other seat.

2. The configuration according to claim 1, wherein:
the column (200) is a center column configured to be positioned between two longitudinal aisles (102a, 102b) oriented parallel to an aircraft longitudinal axis;
the first row (100) includes two oblique seats (104a, 104b); and
the two oblique seats (104a, 104b) are oriented in a toes-out or a toes-in configuration.

3. The configuration according to claim 2, wherein:
the second row (202a) includes two forward facing seats (206a, 206b);
each of the third row and the fourth row (204a, 202b, 204b) includes two forward facing seats; and
the two forward facing seats (206a, 206b) of the second row (202a), the third row and the fourth row (204a, 202b, 204b) are positioned in an alternating configuration in which every other row the two forward facing seats are positioned side-by-side and every other row the two forward facing seats are positioned spaced apart.

4. The configuration according to claim 3, further comprising a partition wall positioned aft of each of the first row, the second row, the third row and the fourth row.

5. The configuration according to claim 2, 3 or 4, wherein a portion of each of the two oblique seats (104a, 104b), when in the lie flat condition, extends into a footwell space (110) formed in a monument (108) positioned forward of the front row (100).

6. The configuration according to claim 2, 3, 4 or 5, further comprising a partition (112) positioned between the two oblique seats (104a, 104b), the partition configured to adjust between an extended condition and a retracted condition.

7. The configuration according to claim 1, wherein:
the first row (306) includes a single oblique seat (308) oriented toes-in or toes-out;
the second row (316a) includes a single forward facing seat (320);
each of the third row and the fourth row (318a, 316b, 318b) includes a single forward facing seat (320); and
the single forward facing seats of the second row, the third row and the fourth row are positioned in an alternating inboard and outboard configuration relative to a longitudinal aisle (102a, 102b).

8. The configuration according to any preceding claim, further comprising a console (114, 314, 210, 212) positioned to one side of each of the at least one oblique seat (104a, 104b, 308) of the first row (100, 306), the at least one forward facing seat (206a, 206b, 320) of the second row (202a, 316a), the at least one forward facing seat (206a, 206b, 208a, 208b, 320) of the third row row, and the at least one forward facing seat (208a, 208b, 320) of the fourth row, and optionally further comprising a footwell formed in the console.

9. A configuration for a passenger cabin of an aircraft, comprising:
a first longitudinal aisle (102a) oriented parallel to an aircraft longitudinal axis;
a second longitudinal aisle (102b) oriented parallel to the aircraft longitudinal axis;
a starboard column (302) of lie flat seats positioned to one side of the first longitudinal aisle (102a);
a port column (304) of lie flat seats positioned to one side of the second longitudinal aisle (102b); and
a center column (200) of lie flat seats positioned between the first longitudinal aisle (102a) and the second longitudinal aisle (102b);
wherein:
each of the starboard column and the port column includes seats in a configuration as claimed in any preceding claim.

## Patentansprüche

1. Konfiguration für eine Spalte (200, 302) von flachen Passagierliegesitzen für eine Luftfahrzeugpassagierkabine, umfassend:
eine erste Reihe (100, 306), die mindestens einen schrägen Sitz (104a, 104b, 308) einschließt;
eine zweite Reihe (202a, 316a), die direkt hinter der ersten Reihe positioniert ist und mindestens einen nach vorne gerichteten Sitz (206a, 206b, 320) einschließt; und
eine Vielzahl von weiteren Reihen, die hinter der zweiten Reihe positioniert ist und mindestens einen nach vorne gerichteten Sitz einschließt, wobei die Vielzahl von weiteren Reihen umfasst:
eine dritte Reihe (204a, 316a), die direkt hinter der zweiten Reihe positioniert ist und mindestens einen nach vorne gerichteten Sitz (208a, 208b, 320) einschließt; und
eine vierte Reihe (202b, 316b), die direkt hinter der dritten Reihe positioniert ist und mindestens einen nach vorne gerichteten Sitz (206a, 206b, 320) einschließt
wobei:
die erste Reihe eine vordere Reihe der Spalte ist;
keine der zweiten Reihe und der Vielzahl von weiteren Reihen einen schrägen Sitz einschließt; und
jeder des mindestens einen schrägen Sitzes der ersten Reihe und des mindestens einen nach vorne gerichteten Sitzes jeder der zweiten Reihe, der dritten Reihe und der vierten Reihe dazu konfiguriert ist, sich zwischen einem aufrechten Zustand und einem flachen Liegezustand einzustellen; und
im flachen Liegezustand jeder des mindestens einen schrägen Sitzes und des mindestens einen nach vorne gerichteten Sitzes jeder der zweiten Reihe und der mindestens einen weiteren Reihe dazu konfiguriert ist, sich mit mindestens einem anderen Sitz zu verschachteln.

2. Konfiguration nach Anspruch 1, wobei:
die Spalte (200) eine mittlere Spalte ist, die dazu konfiguriert ist, zwischen zwei Längsgängen (102a, 102b) positioniert zu werden, die parallel zu einer Luftfahrzeuglängsachse ausgerichtet sind;
die erste Reihe (100) zwei schräge Sitze (104a, 104b) einschließt; und
die zwei schrägen Sitze (104a, 104b) in einer Zehen-nach-außen- oder einer Zehen-nach-innen-Konfiguration ausgerichtet sind.

3. Konfiguration nach Anspruch 2, wobei:
die zweite Reihe (202a) zwei nach vorne gerichtete Sitze (206a, 206b) einschließt;
jede der dritten Reihe und der vierten Reihe (204a, 202b, 204b) zwei nach vorne gerichtete Sitze einschließt; und
die zwei nach vorne gerichteten Sitze (206a, 206b) der zweiten Reihe (202a), der dritten Reihe und der vierten Reihe (204a, 202b, 204b) in einer alternierenden Konfiguration positioniert sind, in der in jeder zweiten Reihe die zwei nach vorne gerichteten Sitze nebeneinander positioniert sind und in jeder anderen zweiten Reihe die zwei nach vorne gerichteten Sitze voneinander beabstandet positioniert sind.

4. Konfiguration nach Anspruch 3, ferner umfassend eine Trennwand, die hinter jeder der ersten Reihe, der zweiten Reihe, der dritten Reihe und der vierten Reihe positioniert ist.

5. Konfiguration nach Anspruch 2, 3 oder 4, wobei ein Teil jedes der zwei schrägen Sitze (104a, 104b) sich in dem flachen Liegezustand in einen Fußraum (110) erstreckt, der in einem Monument (108) ausgebildet ist, das vor der vorderen Reihe (100) positioniert ist.

6. Konfiguration nach Anspruch 2, 3, 4 oder 5, ferner umfassend eine Trennwand (112), die zwischen den zwei schrägen Sitzen (104a, 104b) positioniert ist, wobei die Trennwand dazu konfiguriert ist, sich zwischen einem ausgefahrenen Zustand und einem eingefahrenen Zustand einzustellen.

7. Konfiguration nach Anspruch 1, wobei:
die erste Reihe (306) einen einzelnen schrägen Sitz (308) einschließt, der mit Zehen-nach-innen oder Zehen-nach-außen ausgerichtet ist;
die zweite Reihe (316a) einen einzelnen nach vorne gerichteten Sitz (320) einschließt;
jede der dritten Reihe und der vierten Reihe (318a, 316b, 318b) einen einzelnen nach vorne gerichteten Sitz (320) einschließt; und
die einzelnen nach vorne gerichteten Sitze der zweiten Reihe, der dritten Reihe und der vierten Reihe in einer alternierenden Innen- und Außenkonfiguration relativ zu einem Längsgang (102a, 102b) positioniert sind.

8. Konfiguration nach einem der vorhergehenden Ansprüche, ferner umfassend eine Konsole (114, 314, 210, 212), die auf einer Seite jedes des mindestens einen schrägen Sitzes (104a, 104b, 308) der ersten Reihe (100, 306), des mindestens einen nach vorne gerichteten Sitzes (206a, 206b, 320) der zweiten Reihe (202a, 316a), des mindestens einen nach vorne gerichteten Sitzes (206a, 206b, 208a, 208b, 320) der dritten Reihe Reihe und des mindestens einen nach vorne gerichteten Sitzes (208a, 208b, 320) der vierten Reihe positioniert ist, und optional ferner umfassend einen Fußraum, der in der Konsole ausgebildet ist.

9. Konfiguration für eine Passagierkabine eines Luftfahrzeugs, umfassend:
einen ersten Längsgang (102a), der parallel zu einer Luftfahrzeuglängsachse ausgerichtet ist;
einen zweiten Längsgang (102b), der parallel zu der Luftfahrzeuglängsachse ausgerichtet ist;
eine Steuerbordspalte (302) von flachen Liegesitzen, die auf einer Seite des ersten Längsgangs (102a) positioniert ist;
eine Backbordspalte (304) von flachen Liegesitzen, die auf einer Seite des zweiten Längsgangs (102b) positioniert ist; und
eine Mittelspalte (200) von flachen Liegesitzen, die zwischen dem ersten Längsgang (102a) und dem zweiten Längsgang (102b) positioniert ist;
wobei:
jede der Steuerbordspalte und der Backbordspalte Sitze in einer Konfiguration nach einem der vorhergehenden Ansprüche einschließt.

## Revendications

1. Configuration d'une colonne (200, 302) de sièges-lits passagers à couchage pour une cabine d'avion, comprenant :
une première rangée (100, 306) comportant au moins un siège oblique (104a, 104b, 308) ;
une deuxième rangée (202a, 316a) positionnée directement derrière la première rangée et comportant au moins un siège face à l'avant (206a, 206b, 320) ; et
une pluralité de rangées supplémentaires situées derrière la deuxième rangée et comportant au moins un siège face à l'avant, la pluralité de rangées supplémentaires comprenant :
une troisième rangée (204a, 316a) positionnée directement derrière la deuxième rangée et comportant au moins un siège face à l'avant (208a, 208b, 320) ; et
une quatrième rangée (202b, 316b) positionnée directement derrière la troisième rangée et comportant au moins un siège face à l'avant (206a, 206b, 320)
dans laquelle :
la première rangée est la première rangée de la colonne ;
aucune de la deuxième rangée et de la pluralité de rangées supplémentaires ne comporte de siège oblique ; et
chacun du au moins un siège oblique de la première rangée et du au moins un siège face à l'avant de chacune de la deuxième rangée, de la troisième rangée et de la quatrième rangée est configuré pour s'ajuster entre une position verticale et une position allongée ; et
en position allongée, chacun du au moins un siège oblique et du au moins un siège face à l'avant de chacune de la deuxième rangée et de la au moins une rangée supplémentaire est configuré pour s'emboîter avec au moins un autre siège.

2. Configuration selon la revendication 1, dans laquelle :
la colonne (200) est une colonne centrale configurée pour être positionnée entre deux allées longitudinales (102a, 102b) orientées parallèlement à l'axe longitudinal de l'aéronef ;
la première rangée (100) comporte deux sièges obliques (104a, 104b) ; et
les deux sièges obliques (104a, 104b) sont orientés dans une configuration orteils vers l'extérieur ou orteils vers l'intérieur.

3. Configuration selon la revendication 2, dans laquelle :
la deuxième rangée (202a) comporte deux sièges face à l'avant (206a, 206b) ;
chacune de la troisième rangée et de la quatrième rangée (204a, 202b, 204b) comporte deux sièges face à l'avant ; et
les deux sièges face à l'avant (206a, 206b) de la deuxième rangée (202a), de la troisième rangée et de la quatrième rangée (204a, 202b, 204b) sont positionnés dans une configuration alternée dans laquelle, une rangée sur deux, les deux sièges face à l'avant sont positionnés côte à côte et une rangée sur deux, les deux sièges face à l'avant sont positionnés espacés.

4. Configuration selon la revendication 3, comprenant en outre une cloison positionnée à l'arrière de chacune de la première rangée, de la deuxième rangée, de la troisième rangée et de la quatrième rangée.

5. Configuration selon la revendication 2, 3 ou 4, dans laquelle une partie de chacun des deux sièges obliques (104a, 104b), lorsqu'il est en position allongée, s'étend dans un espace pour les pieds (110) formé dans un monument (108) positionné devant la première rangée (100).

6. Configuration selon la revendication 2, 3, 4 ou 5, comprenant en outre une cloison (112) positionnée entre les deux sièges obliques (104a, 104b), la cloison étant configurée pour s'ajuster entre une condition étendue et une condition rétractée.

7. Configuration selon la revendication 1, dans laquelle :
la première rangée (306) comporte un seul siège oblique (308) orienté orteils vers l'intérieur ou orteils vers l'extérieur ;
la deuxième rangée (316a) comporte un seul siège face à l'avant (320) ;
chacune de la troisième rangée et de la quatrième rangée (318a, 316b, 318b) comporte un seul siège face à l'avant (320) ; et
les seuls sièges orientés face à l'avant de la deuxième rangée, de la troisième rangée et de la quatrième rangée sont positionnés dans une configuration alternée intérieure et extérieure par rapport à une allée longitudinale (102a, 102b).

8. Configuration selon une quelconque revendication précédente, comprenant en outre une console (114, 314, 210, 212) positionnée d'un côté de chacun du au moins un siège oblique (104a, 104b, 308) de la première rangée (100, 306), du au moins un siège face à l'avant (206a, 206b, 320) de la deuxième rangée (202a, 316a), du au moins un siège face à l'avant (206a, 206b, 208a, 208b, 320) de la troisième rangée et du au moins un siège face à l'avant (208a, 208b, 320) de la quatrième rangée, et comprenant éventuellement en outre un espace pour les pieds formé dans la console.

9. Configuration pour une cabine de passagers d'aéronef, comprenant :
une première allée longitudinale (102a) orientée parallèlement à l'axe longitudinal de l'aéronef ;
une seconde allée longitudinale (102b) orientée parallèlement à l'axe longitudinal de l'aéronef ;
une colonne tribord (302) de sièges-lits à couchage positionnée d'un côté de la première allée longitudinale (102a) ;
une colonne bâbord (304) de sièges-lits à couchage positionnée d'un côté de la seconde allée longitudinale (102b) ; et
une colonne centrale (200) de sièges-lits à couchage positionnée entre la première allée longitudinale (102a) et la seconde allée longitudinale (102b) ;
dans laquelle :
chacune de la colonne tribord et de la colonne bâbord comporte des sièges dans une configuration selon une quelconque revendication précédente.
